# EUROPEAN PATENT SPECIFICATION

(11) **EP 3 297 963 B1**
(45) Date of publication and mention of the grant of the patent: **16.06.2021**
(21) Application number: 16726459.7
(22) Date of filing: 17.05.2016
(51) Int. Cl.: C03B 33/023, C03B 33/037, C03B 33/09, C03B 35/16, C03B 17/06

(54) **CONTINUOUS PROCESSING OF FLEXIBLE GLASS RIBBON WITH RIBBON ISOLATION AND STABILIZATION**
KONTINUIERLICHE VERARBEITUNG EINES FLEXIBLEN GLASBANDES MIT BANDISOLIERUNG UND -STABILISIERUNG
TRAITEMENT EN CONTINU D'UN RUBAN DE VERRE FLEXIBLE AVEC ISOLEMENT ET STABILISATION DU RUBAN

(30) Priority: 18.05.2015 US 201562163078 P
(43) Date of publication of application: 28.03.2018
(73) Proprietor: Corning Incorporated, Corning, New York 14831 (US)
(72) Inventor: ABURADA, Tomohiro, Painted Post, New York 14870 (US); KUDVA, Gautam Narendra, Horseheads, New York 14845 (US); MERZ, Gary Edward, Rochester, New York 14610 (US); MORSE, Kathleen Elizabeth, Painted Post, New York 14870 (US); TROSA, Matthew Daniel, Horseheads, New York 14845 (US)
(74) Representative: Elkington and Fife LLP
(86) International application number: PCT/US2016/032852
(87) International publication number: WO 2016/187190

(56) References cited:
- WO-A1-2014/052548
- WO-A1-2015/029669
- CN-A- 101 580 179
- GB-A- 1 403 717
- JP-A- 2008 019 102
- US-A1- 2004 007 020
- US-A1- 2014 130 649

## Description

### TECHNICAL FIELD

The present invention relates to apparatus and methods for continuous processing of flexible glass ribbon and, in particular, methods for continuous processing of flexible glass ribbon with ribbon isolation and stabilization.

### BACKGROUND

Glass processing apparatus are commonly used to form various glass products such as LCD sheet glass. Glass substrates in flexible electronic applications are becoming thinner and lighter. Glass substrates having thicknesses lower than 0.5 mm, such as less than 0.35 mm, such as 0.1 mm or even thinner can be desirable for certain display applications, especially portable electronic devices, such as laptop computers, handheld devices and the like.

While flexible glass ribbon may be formed continuously, the flexible glass ribbon is often separated into individual glass sheets after the flexible glass ribbon has been cooled and solidified. As glass thicknesses continue to decrease, the flexible glass ribbon becomes more flexible, which can create challenges particularly for ultra-thin glass no more than 0.35 mm. Moreover, there are several unique features of glass that create challenges for successful conveyance and stabilization of the glass ribbon. First, the glass can be sensitive to surface defects. These surface defects can create stress points that can generate cracks and lead to breakage of the flexible glass ribbon. Therefore, roller conveyance that directly contacts the web surface, as is typically done with plastic, paper, or metal webs is often not acceptable as is contact can lead to such surface defects. With glass webs, non-contact air conveyance replace roller conveyance. This air conveyance can be unstable, due to the lack of lateral web constraints. Second, maintaining lateral alignment of the glass ribbon as the glass ribbon travels through glass manufacturing equipment may be complicated by misalignment of components of the glass manufacturing equipment. Further, instabilities, perturbations, vibrations, and transient effects that may exist in manufacturing environments or in processing and handling equipment may cause intermittent or extended misalignment of the glass ribbon in the lateral direction to occur. Third, the forming process can produce differential cross web camber (continuous curvature in one direction) into the glass ribbon. This camber, thickness variation, and possible residual stresses can cause the glass ribbon to shift laterally toward its "long" side, rather than conveying in a straight line. All of these possibilities can result in the glass ribbon walking and twisting in various parts of the process in an unintended manner, making processing the web challenging.

US Patent application No. 2014/0130649 A1 discloses a method for processing flexible glass ribbons using lateral guides. International Patent application WO 2015/029669 discloses a method for processing flexible glass ribbons having lateral guides and two isolated cutting zones.

### SUMMARY

The present concept involves continuous processing of flexible glass ribbon. Continuous processing of flexible glass ribbon can include connections among a number of process steps, such as forming, cutting, spooling, etc. It is important to isolate and stabilize the flexible glass ribbon as it is conveyed through a glass processing apparatus that may include one or more of these processing steps.

The invention provides a method of continuous processing of flexible glass ribbon having a thickness of no more than 0.35 mm according to claim 1, and a glass processing apparatus according to claim 5.

According to 2. P the invention, a method of continuous processing of flexible glass ribbon having a thickness of no more than 0.35 mm using a glass processing apparatus is provided. The method includes continuously feeding the flexible glass ribbon through a cutting zone, including an edge trimming apparatus configured to separate an edge of the flexible glass ribbon as the flexible glass ribbon moves by a cutting device within the cutting zone, forming a continuous strip of edge trim connected to an upstream portion of the flexible glass ribbon. A feed rate of the flexible glass ribbon is controlled through the cutting zone using a global control device. Lateral position of the flexible glass ribbon is controlled through the cutting zone using a multi-axis steering apparatus comprising a first roller set and a second roller set located downstream of the first roller set.

According to the invention, the first roller set includes a first roller pair located at a first edge of the flexible glass ribbon and a second roller pair located at a second edge of the flexible glass ribbon opposite the first edge.

According to the invention, the second roller set includes a first roller pair located at the first edge of the flexible glass ribbon and a second roller pair located at the second edge of the flexible glass ribbon.

According to the invention, the step of controlling the lateral position of the flexible glass ribbon includes providing a speed differential between the first roller pair and the second roller pair of one or both of the first roller set and the second roller set.

According to the invention, the step of controlling the lateral position of the flexible glass ribbon includes changing a direction of rotation of one or both of the first roller pair and the second roller pair of one or both of the first roller set and the second roller set to be offset from a machine centerline.

Additional features and advantages will be set forth in the detailed description which follows, and in part will be readily apparent to those skilled in the art from the description or recognized by practicing the invention as exemplified in the written description and the appended drawings and as defined in the appended claims. It is to be understood that both the foregoing general description and the following detailed description are merely exemplary of the invention, and are intended to provide an overview or framework to understanding the nature and character of the invention as it is claimed.

The accompanying drawings are included to provide a further understanding of principles of the invention, and are incorporated in and constitute a part of this specification. The drawings illustrate one or more embodiment(s), and together with the description serve to explain, by way of example, principles and operation of the invention. It is to be understood that various features of the invention disclosed in this specification and in the drawings can be used in any and all combinations.

### BRIEF DESCRIPTION OF THE DRAWINGS

FIG. 1 is a schematic view of an embodiment of a flexible glass forming method and apparatus;
FIG. 2 is a schematic, detail view of the flexible glass forming method and apparatus of FIG. 1 according to one or more embodiments described herein;
FIG. 3 is a schematic, plan view of an embodiment of an multi-axis steering apparatus according to one or more embodiments described herein;
FIG. 4 is a schematic, side view of the multi-axis steering apparatus of FIG. 3 according to one or more embodiments described herein;
FIG. 5 is a schematic, side view of an embodiment of an edge trimming apparatus according to one or more embodiments described herein;
FIG. 6 is a schematic view of a lateral half of a glass processing apparatus illustrating buffer zones according to one or more embodiments described herein; and
FIG. 7 illustrates a diagrammatic illustration of a conveyance path P for the flexible glass ribbon according to one or more embodiments described herein.

### DETAILED DESCRIPTION

In the following detailed description, for purposes of explanation and not limitation, example embodiments disclosing specific details are set forth to provide a thorough understanding of various principles of the present disclosure. However, it will be apparent to one having ordinary skill in the art, having had the benefit of the present disclosure, that the present disclosure may be practiced in other embodiments that depart from the specific details disclosed herein. Moreover, descriptions of well-known devices, methods and materials may be omitted so as not to obscure the description of various principles of the present disclosure. Finally, wherever applicable, like reference numerals refer to like elements.

Ranges can be expressed herein as from "about" one particular value, and/or to "about" another particular value. When such a range is expressed, another embodiment includes from the one particular value and/or to the other particular value. Similarly, when values are expressed as approximations, by use of the antecedent "about," it will be understood that the particular value forms another embodiment. It will be further understood that the endpoints of each of the ranges are significant both in relation to the other endpoint, and independently of the other endpoint.

Directional terms as used herein - for example up, down, right, left, front, back, top, bottom - are made only with reference to the figures as drawn and are not intended to imply absolute orientation.

Unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that an order be inferred, in any respect. This holds for any possible non-express basis for interpretation, including: matters of logic with respect to arrangement of steps or operational flow; plain meaning derived from grammatical organization or punctuation; the number or type of embodiments described in the specification.

As used herein, the singular forms "a," "an" and "the" include plural referents unless the context clearly dictates otherwise. Thus, for example, reference to a "component" includes aspects having two or more such components, unless the context clearly indicates otherwise.

Embodiments described herein generally relate to continuous processing of flexible glass ribbon that includes continuous separation of beaded edges of the flexible glass web. To maintain continuous controlled crack propagation, it can be important to minimize mechanical stress magnitude and variance so that the laser can control the crack velocity to match the web velocity. Disclosed herein are apparatus and process that isolate beaded edge separation processes from upstream flexible glass ribbon forming process and subsequent downstream processes, such as spooling of the flexible glass ribbon, and that also can be used to stabilize the flexible glass ribbon during the separation process.

While glass is generally known as a brittle material, inflexible and prone to scratching, chipping and fracture, glass having a thin cross section can in fact be quite flexible. Glass in long thin sheets or ribbons can be wound and un-wound from rolls, much like paper or plastic film.

Maintaining lateral alignment of the glass ribbon as the glass ribbon travels through glass manufacturing equipment may be complicated by misalignment of components of the glass manufacturing equipment. Further, instabilities, perturbations, vibrations, and transient effects that may exist in manufacturing environments or in processing and handling equipment may cause intermittent or extended misalignment of the glass ribbon to occur. Lack of alignment can cause the high stiffness glass web to tilt cross-web and oscillate laterally. In extreme cases, the instabilities, perturbations, vibrations, and transient effects of the glass ribbon may lead to fracture.

Some glass ribbons are processed by continuously separating thickened edge beads from the glass ribbon. During the bead removal process, the thickened edge beads are separated from the glass ribbon and are conveyed down an alternate path from the product glass ribbon. The thickened beads impart stress on the glass ribbon at the point where the glass ribbon is separated from the thickened edge beads. The relative angle between the glass ribbon and the separated thickened edge beads affects the stress at the separation point. Misalignment causing lateral variation of the glass ribbon in the bead separation process can cause stress variance at the crack tip or separation point, potentially causing ribbon breakage or poor edge separation attributes, such as inferior edge strength and edge damage. In some embodiments, an edge strength of at least about 100 MPA, such as at least about 200 MPa may be maintained at the cut edge after separation of the bead.

The apparatus and methods described introduce web stability and mechanical isolation of the laser separation process. First, multiple sets of pinch drives may be used at an entrance and exit to the laser separation process to manage web tension, lateral position, and vertical position of the flexible glass ribbon in the laser separation zone. Second, a conveyance path may be provided and optimized for bead/cullet management to isolate vibrations due to cullet creation from reaching the laser separation zone. For example, free loops may be provided both upstream and downstream of the edge separation process as well as an increased overall bead conveyance path length (which can have the effect of reducing bead stiffness which reduces the transmission of perturbations back to the crack tip).

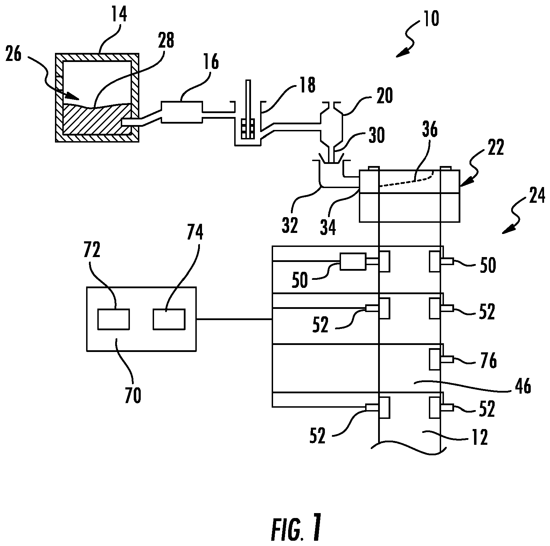

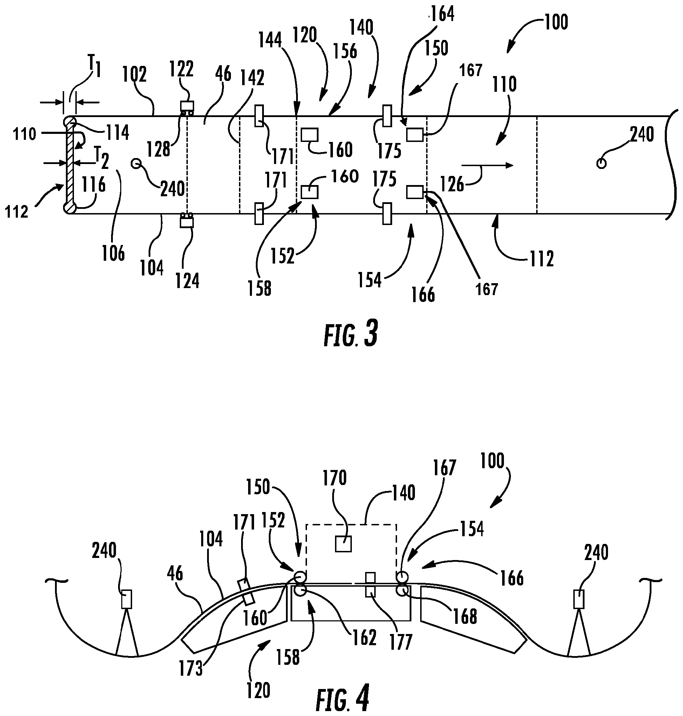

Referring to FIG. 1, an exemplary glass manufacturing apparatus 10 that incorporates a fusion process to produce a glass ribbon 46 is depicted. The glass manufacturing apparatus 10 may be part of a glass processing apparatus 100 (FIGS. 3 and 4), as will be described in greater detail below, where a glass ribbon is formed, separated along edges and then rolled in a continuous process. The glass manufacturing apparatus 10 includes a melting vessel 14, a fining vessel 16, a mixing vessel 18 (e.g., a stir chamber), a delivery vessel 20 (e.g., a bowl), a forming apparatus 22 and a draw apparatus 24. The glass manufacturing apparatus 10 produces a continuous glass ribbon 46 from batch materials, first by melting and combining the batch materials into molten glass, distributing the molten glass into a preliminary shape, applying tension to the glass ribbon 46 to control the dimensions of the glass ribbon 46 as the glass cools and viscosity increases, such that the glass ribbon 46 goes through a visco-elastic transition and has mechanical properties that give the glass ribbon 46 stable dimensional characteristics.

In operation, batch materials for forming glass are introduced into the melting vessel 14 as indicated by arrow 26 and are melted to form molten glass 28. The molten glass 28 flows into the fining vessel 16, wherein gas bubbles are removed from the molten glass. From the fining vessel 16, the molten glass 28 flows into the mixing vessel 18, where the molten glass 28 undergoes a mixing process to homogenize the molten glass 28. The molten glass 28 flows from the mixing vessel 18 to the delivery vessel 20, which delivers the molten glass 28 through a downcomer 30 to an inlet 32 and into the forming apparatus 22.

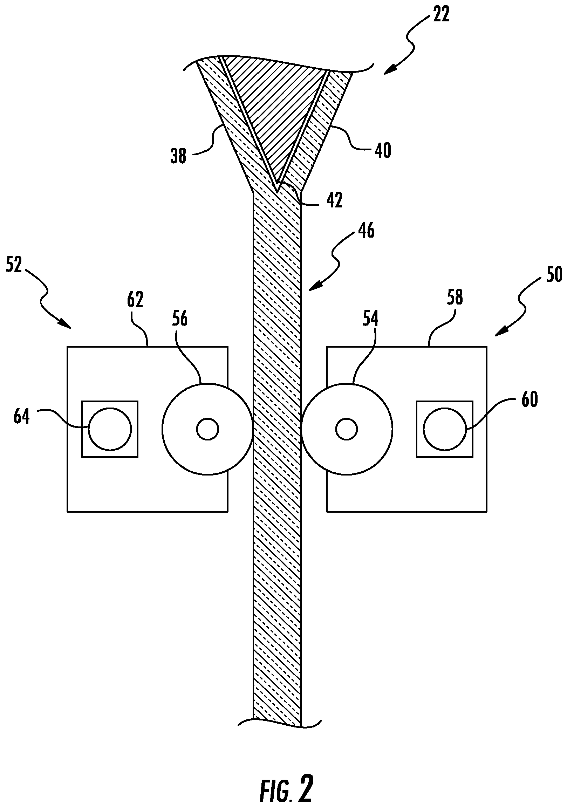

The forming apparatus 22 depicted in FIG. 1 is used in a fusion draw process to produce the flexible glass ribbon 46 that has high surface quality and low variation in thickness. The forming apparatus 22 includes an opening 34 that receives the molten glass 28. The molten glass 28 flows into a trough 36 and then overflows and runs down the sides of the trough 36 in two partial ribbon portions 38, 40 (see FIG. 2) before fusing together below the root 42 of the forming apparatus 22. The two partial ribbon portions 38, 40 of the still-molten glass 28 rejoin with one another (e.g., fuse) at locations below the root 42 of the forming apparatus 22, thereby forming a flexible glass ribbon 46 (also referred to as a glass ribbon or web). The flexible glass ribbon 46 is drawn downward from the forming apparatus by the draw apparatus 24. While the forming apparatus 22 is shown and described herein implements a fusion draw process, it should be understood that other forming apparatuses may be used including without limitation slot draw apparatuses and the like.

As shown in FIG. 2, the draw apparatus 24 may include a plurality of actively-driven stub roller pairs 50, 52, each of which include a front-side stub roller 54 and a rear-side stub roller 56. The front-side stub roller 54 is coupled to a front-side transmission 58, which is coupled to a front-side motor 60. The front-side transmission 58 modifies the output speed and torque of the front-side motor 60 that is delivered to the front-side stub roller 54. Similarly, the rear-side stub roller 56 is coupled to a rear-side transmission 62, which is coupled to a rear-side motor 64. The rear-side transmission 62 modifies the output speed and torque of the rear-side motor 64 that is delivered to the rear-side stub roller 56.

Referring back to FIG. 1, operation of the plurality of stub roller pairs 50, 52 may be controlled by a global control device 70 (e.g., a PLC) for a variety of conditions including, for example and without limitation, torque applied to the flexible glass ribbon 46 and rate of rotation of the stub rollers 54, 56. The draw forces applied to the flexible glass ribbon 46 by the plurality of stub roller pairs 50, 52 while the flexible glass ribbon 46 is still in a visco-elastic state cause the flexible glass ribbon 46 to pull or stretch, thereby controlling the dimensions of the flexible glass ribbon 46 by controlling the tension applied to the flexible glass ribbon 46 in one or both the draw and cross-draw directions as the flexible glass ribbon 46 translates along the draw apparatus 24, while also imparting motion to the flexible glass ribbon 46.

The global control device 70 may include computer readable instructions stored in memory 72 and executed by a processor 74 that can determine, among other things, draw tension and speed of the flexible glass ribbon 46 provided by the stub roller pairs 50 and 52, for example, using any suitable sensors that provide feedback to the global control device 70. Further, the computer readable instructions can allow modification of parameters, such as torque and velocity of the stub roller pairs 50, 52 in light of feedback from the sensors. As one example, a stub roller 76 may be provided that communicates with the global control device 70 to indicate rate of rotation. The rate of rotation of the stub roller 76 with the flexible glass ribbon 46 can be used by the global control device 70 to determine the extrinsic linear feed rate of the flexible glass ribbon 46 as the flexible glass ribbon 46 moves thereby.

As the flexible glass ribbon 46 is drawn through the draw apparatus 24, the glass has an opportunity to cool. The glass manufacturing apparatus 100 having the plurality of stub roller pairs 50, 52 may improve the control and consistency of the cross-draw tension and/or down-drawn tension in the area in which the glass ribbon 46 goes through a visco-elastic transformation. This area may be defined as the "setting zone" in which the stress and flatness are set into the glass ribbon 46. Glass manufacturing apparatus 100 that include the plurality of actively driven stub roller pairs 50, 52 may provide improvements in the manufacturing of flexible glass ribbon 46 as compared to conventionally designed manufacturing apparatus that incorporate rollers that extend along the entire width of the flexible glass ribbon 46. However, in certain situations, manufacturing apparatus that utilize rollers that extend along the entire width of the flexible glass ribbon 46 may be used.

The global control device 70 may use the draw apparatus 24 to set a global master speed for the glass processing apparatus 100 (FIGS. 3 and 4), while also shaping the flexible glass ribbon 46. Referring to FIG. 3, as noted above, the glass manufacturing system 10 may be part of the glass processing apparatus 100. The flexible glass ribbon 46 is illustrated being conveyed through the glass processing apparatus 100, another portion of which is illustrated by FIG. 3. The flexible glass ribbon 46 may be conveyed in a continuous fashion from the glass manufacturing system 10 (FIG. 1) through the glass processing apparatus 100. The flexible glass ribbon 46 includes a pair of opposed first and second edges 102 and 104 that extend along a length of the flexible glass ribbon 46 and a central portion 106 that spans between the first and second edges 102 and 104. In some embodiments, the first and second edges 102 and 104 may be covered in a pressure sensitive adhesive tape that is used to protect and shield the first and second edges 102 and 104 from contact. The tape may be applied to one or both of the first and second edges 102 and 104 as the flexible glass ribbon 46 moves through the apparatus 100 after the edge beads are removed. In other embodiments, the pressure sensitive tape may not be used or the tape may be applied. A first broad surface 110 and an opposite, second broad surface 112 also span between the first and second edges 102 and 104, forming part of the central portion 106.

In embodiments where the flexible glass ribbon 46 is formed using a down draw fusion process, the first and second edges 102 and 104 may include beads 114 and 116 with a thickness T₁ that is greater than a thickness T₂ within the central portion 106. The central portion 106 may be "ultra-thin" having a thickness T₂ of about 0.35 mm or less, including but not limited to thicknesses of, for example, about 0.01-0.05 mm, about 0.05-0.1 mm, about 0.1-0.15 mm and about 0.15-0.35 mm, although flexible glass ribbons 46 with other thicknesses may be formed in other examples.

The flexible glass ribbon 46 is transported through the apparatus 100 using a ribbon conveyance system 120 (FIG. 4) that is controlled by the global control device 70 (FIG. 1). Lateral guides 122 and 124 may be provided to orient the flexible glass ribbon 46 in the correct lateral position relative to the machine or travel direction 126 of the flexible glass ribbon 46. For example, as schematically shown, the lateral guides 122 and 124 may include rollers 128 that engage the first and second edges 102 and 104. Opposed forces may be applied to the first and second edges 102 and 104 using the lateral guides 122 and 124 that help to shift and align the flexible glass ribbon 46 in the desired lateral orientation in the travel direction 126. In other embodiments, lateral guides 122 and 124 may not be used.

The glass processing apparatus 100 can further include a cutting zone 140 downstream from a bend axis 142 about which the flexible glass ribbon 46 may be bent. In one example, the apparatus 100 may include a cutting support member configured to bend the flexible glass ribbon 46 in the cutting zone 140 to provide a target segment 144 with a convex radius. Bending the target segment 144 within, before and/or after the cutting zone 140 can help maximize conformance of the flexible glass ribbon 46 to the support, thereby minimizing mechanical stresses of the flexible glass ribbon 46 during the cutting procedure. Such bending of the flexible glass ribbon 46 to the support can help prevent buckling or disturbing the flexible glass ribbon profile during the procedure of separating at least one of the first and second edges 102 and 104 from the central portion 106 of the flexible glass ribbon 46.

Providing the target segment 144 that has a convex radius at the cutting zone 140 (upstream, downstream and/or within the cutting zone 140) can increase the cross-direction rigidity of the flexible glass ribbon 46 throughout the cutting zone 140 and can help maximize web conformance to the support thereby minimizing mechanical stress in the flexible glass ribbon 46 during the cutting procedure. Such conformation can help prevent buckling or disturbing the glass ribbon profile during the procedure of separating at least one of the first and second edges 102 and 104. Moreover, the convex radius of the target segment 144 can increase the rigidity of the target segment 144 to allow optional fine tune adjustment of the lateral orientation of the target segment 144. As such, the flexible glass ribbon 46 can be effectively properly laterally oriented during the procedure of separating at least one of the first and second edges 102 and 104.

In the illustrated example referring also to FIG. 4, the glass processing apparatus 100 includes a multi-axis steering apparatus 150 for use in laterally adjusting the flexible glass substrate 46 as it moves by the cutting zone 140. The multi-axis steering apparatus 150 includes a first roller set 152 and a second roller set 154 downstream of the first roller set 152. In some embodiments, the first roller set 152 may be upstream of an edge trimming apparatus 170 (FIG. 4) and the second roller set 154 may be downstream of the edge trimming apparatus 170. However, other configurations are possible where the first roller set 152 and second roller set 154 are located at the same upstream or downstream side of the edge trimming apparatus 170, or multiple roller sets may be located both upstream and downstream of the edge trimming apparatus 170.

The first roller set 152 located upstream of the edge trimming apparatus 170 includes a first roller pair 156 located at the first edge 102 of the flexible glass substrate 46 and a second roller pair 158 located at the second edge 104 of the flexible glass substrate 46. Each of the first and second roller pairs 156 and 158 include an upper pull roll member 160 and a lower pull roll member 162. The upper and lower pull roll members 160 and 162 can each be provided with a compliant elastomer roll covering (e.g., a silicone rubber or equivalent), and respective pairs of them (i.e., first roller pair 156 and second roller pair 158) are arranged to engage the first and second edges 102 and 104 of the glass ribbon 46 there between. At least one of the upper and lower pull roll members 160 and 162 in each roller pair 156 and 158 may be provided with a respective motor. For example, as shown, the upper pull roll member 160 of the second roller pair 158 is provided with a motor whereas the lower pull roll member 162 of the second roller pair 158 is provided with a bearing such that only one of the upper and lower pull roll members 160 or 162 is driven and the other rolls from contact with glass ribbon and pinch force with the other roller. Alternatively, the lower pull roll member 162 of the first roller pair 156 can be provided with a motor, whereas the upper pull roll member 160 of the first roller pair 156 can be provided with a bearing such that only one of the upper and lower pull roll members 160 or 162 is driven and the other rolls from contact with the glass ribbon and pinch force with the other roll.

The multi-axis steering apparatus 150 includes the second roller set 154 positioned downstream of the edge trimming apparatus 170. The second roller set 154 includes a first roller pair 164 located at the first edge 102 of the flexible glass substrate 46 and a second roller pair 166 located at the second edge 104 of the flexible glass substrate 46. Each of the first and second roller pairs 164 and 166 include an upper pull roll member 167 and a lower pull roll member 168. The upper and lower pull roll members 167 and 168 can each be provided with a compliant elastomer roll covering (e.g., silicone rubber or equivalent), and respective pairs of them (i.e., first roller pair 164 and second roller pair 166) are arranged to engage the first and second edges 102 and 104 of the glass ribbon 46 there between. At least one of the upper and lower pull roll members 167 and 168 in each roller pair 164 and 166 may be provided with a respective motor. For example, as shown, the upper pull roll member 167 of the second roller pair 166 is provided with a motor whereas the lower pull roll member 168 of the second roller pair 166 is provided with a bearing such that only one of the upper and lower pull roll members 167 or 168 is driven and the other rolls from contact with glass ribbon and pinch force with the other roller. Alternatively, the lower pull roll member 168 of the first roller pair 164 can be provided with a motor, whereas the upper pull roll member 167 of the first roller pair 164 can be provided with a bearing such that only one of the upper and lower pull roll members 167 or 168 is driven and the other rolls from contact with the glass ribbon and pinch force with the other roll.

As can be seen, the axes of the first and second roller pairs 156, 158 of the first roller set 152 are substantially aligned in the lateral direction and the axes of the first and second roller pairs 164, 166 of the second roller set 154 are substantially aligned in the lateral direction to provide dual axis steering capability. Not only can the multi-axis steering apparatus 150 be used to control tension and height of the flexible glass ribbon 46 as it travels through the cutting zone 150, but also the multi-axis steering apparatus 150 may utilize edge sensors 171, 173 and 175, 177 to provide an indication of lateral position of the flexible glass ribbon 46 and control lateral position of the flexible glass ribbon 46. The edge sensors 171, 173 and 175, 177 may provide a signal to the global control device 70, which can be used by the global control device 70 to determine lateral position of the flexible glass ribbon 46 (e.g., by determining a centerline of the flexible glass ribbon 46 upstream and/or downstream of the edge trimming apparatus 170). As one example, relative speed of the first and second roller pairs 156, 158 of the first roller set 152 and the relative speed of the first and second roller pairs 164, 166 of the second roller set 154 may be varied to alter the lateral position of the flexible glass ribbon 46. For example, one of the first and second roller pairs 164, 166 may be sped up or slowed down relative to the other roller pair to alter lateral position of the flexible glass ribbon 46. The flexible glass ribbon 46 can track toward the roller pair 164, 166 having a greater speed. Once the desired lateral position (or within a predetermined tolerance) is determined by the global control device 70 using the edge sensors 171, 173 and 175, 177, speed of the first and second roller pairs 156, 158, 164, 166 of the first and/or second roller sets 152 and 154 can be matched. Additional details of determining lateral position of the flexible glass ribbon 46 are described below.

As another example of controlling lateral position of the flexible glass ribbon 46, position of the axes of rotation of the first and second roller pairs 156, 158 and 164, 166 of the first and/or second roller sets 152 and 154 can be changed (for example, pivoted to cause the roller pairs to be oriented toe out or toe in relative to the travel direction 126, or centerline, of the glass ribbon 46). Under normal operation conditions, the direction of rotation of the first and second roller pairs 156, 164 and 158, 166 of the first and/or second roller sets 152 and 154 is parallel to the machine centerline. As used herein, the "machine centerline" refers to an imaginary centerline passing through a geometric center of the desired conveyance path in the machine direction. When an offset is detected by the global control device 70 between the flexible glass ribbon 46 centerline and the machine centerline, the global control device 70 may adjust the axes or rotation of the first and second roller pairs 156, 158 and 164, 166 of the first and/or second roller sets 152 and 154 to move the centerline of the flexible glass ribbon 46 toward the machine centerline. In some embodiments, each roller pair 156, 158 and 164, 166 of each roller set 152 and 154 may be rotated together to the same angular change for that particular roller set 152 and 154.

In some embodiments, it may be desirable for the centerline of the flexible glass ribbon 46 to coextend with the machine centerline or be within a predetermined tolerance from the machine centerline. Knowing the machine centerline, the global control device 70 can determine the centerline position of the flexible glass substrate 46 using the edge sensors 171, 173 and 175, 177. The centerline position of the flexible glass substrate 46 can be compared by the global control device 70 to the machine centerline and an offset can be determined by the global control device between the centerline position of the flexible glass substrate 46 and the machine centerline. The global control device 70 may then control the first and second roller pairs 156, 158 and 164, 166 of the first and/or second roller sets 152, 154 based on a logic algorithm to move the centerline of the flexible glass ribbon 46 to a steering centerline determined by the global control device 70 based on the offset to allow the centerline of the flexible glass ribbon 46 to move closer to the machine centerline. This can include an offset of zero, where the flexible glass ribbon 46 centerline is being controlled directly to match the position of the machine centerline. In some embodiments, combinations of both speed differential and roller repositioning may be used.

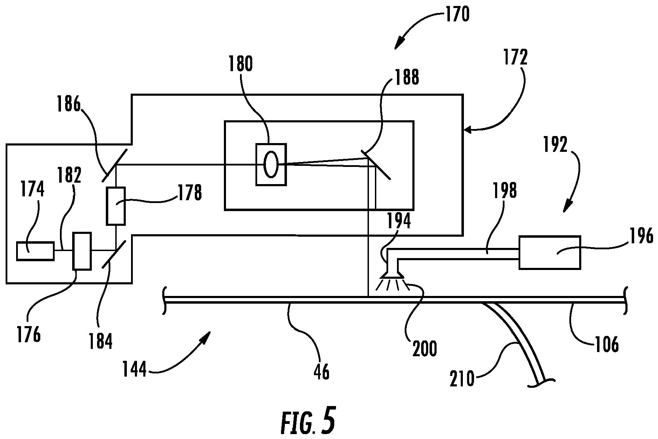

Referring to FIG. 5, the apparatus 100 can further include a wide range of edge trimming apparatus configured to separate the first and second edges 102 and 104 from the central portion 106 of the flexible glass ribbon 46 in a continuous fashion. In one example, as shown in FIG. 5, an edge trimming apparatus 170 can include an optical delivery apparatus 172 for irradiating and therefore heating a portion of the upwardly facing surface of the convex radius target segment 144. In one example, optical delivery apparatus 172 can comprise a cutting device such as the illustrated laser 174 although other radiation sources may be provided in further examples. The optical delivery apparatus 172 can further include a circular polarizer 176, a beam expander 178, and a beam shaping apparatus 180.

The optical delivery apparatus 172 may further comprise optical elements, for redirecting a beam of radiation (e.g., laser beam 182) from the radiation source (e.g., laser 174), such as mirrors 184, 186 and 188. The radiation source can comprise the illustrated laser 174 configured to emit a laser beam having a wavelength and a power suitable for heating the flexible glass ribbon 46 at a location where the beam is incident on the flexible glass ribbon 46. In one embodiment, laser 174 can comprise a CO₂ laser, although other laser types may be used in further examples.

As further shown in FIG. 5, the example edge trimming apparatus 170 can also include a coolant fluid delivery apparatus 192 configured to cool the heated portion of the upwardly facing surface of the convex radius target segment 144. The coolant fluid delivery apparatus 192 can comprise a coolant nozzle 194, a coolant source 196 and an associated conduit 198 that may convey coolant to the coolant nozzle 194.

In one example, a coolant jet 200 comprises water, but may be any suitable cooling fluid (e.g., liquid jet, gas jet or a combination thereof) that does not stain, contaminate or damage the upwardly facing surface of the target segment 144 of the flexible glass ribbon 46. The coolant jet 200 can be delivered to a surface of the flexible glass ribbon 46 to form a cooling zone. The cooling zone can trail behind a radiation zone to propagate an initial crack.

The combination of heating and cooling with the optical delivery apparatus 172 and the coolant fluid delivery apparatus 192 can effectively separate the first and second edges 102 and 104 from the central portion 106 while minimizing or eliminating undesired residual stress, microcracks or other irregularities in the opposed edges 206, 208 of the central portion 106 that may be formed by other separating techniques. Moreover, due to the convex radius of the target segment 144 within the cutting zone 140, the flexible glass ribbon 46 can be positioned and stabilized to facilitate precise separating of the first and second edges 102 and 104 during the separating process. Still further, due to the convex surface topography of the upwardly facing convex support surface, the continuous strips of edge trim 210 can immediately travel away from the central portion 106, thereby reducing the probability that the first and second edges 102 and 104 will subsequently engage (and therefore damage) the first and second broad surfaces and/or the high quality opposed edges of the central portion 106. The central portion 106 may then be wound into a roll using a spooling apparatus.

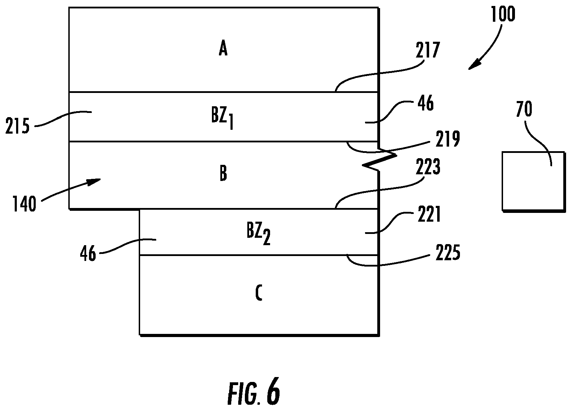

Referring to FIG. 6, the various processes (e.g., forming, edge separating and rolling) may introduce instabilities, perturbations, vibrations, and transient effects to the flexible glass ribbon 46 as the flexible glass ribbon 46 travels through the glass processing apparatus 100. To reduce the upstream and/or downstream impact of any instabilities, perturbations, vibrations, and transient effects, the glass processing apparatus may be divided into a number of mechanically isolated processing zones, each zone corresponding to one or more different processes. In the illustrated example shown schematically, processing zone A includes a flexible glass ribbon forming process, processing zone B includes a flexible glass ribbon cutting process (the cutting zone 140) and processing zone C includes a flexible glass ribbon winding process, where the processes within the processing zones may be similar to any of the processes described above.

A buffer zone BZ₁ may be provided between processing zone A and processing zone B for process isolation between the processing zones A and B. Within the buffer zone BZ₁, the flexible glass ribbon 46 may be held in a free loop 215 and may hang in a catenary between entrance and exit positions 217 and 219, respectively. For example, positions 217 and 219 may be between about 1.5 meters and about 7.5 meters apart to allow use of a number of cullet chutes, loop out mitigation devices, etc. Between these two positions 217, 219, the flexible glass ribbon 46 is not pulled tight but, instead, hangs under its own weight. For example, the tension in the flexible glass ribbon 46 is determined by the weight of the flexible glass ribbon 46 and may be no more than about 17.5 Newtons per metre (N/m) (0.1 pound per linear inch ("pli")), such as between about 1.75 N/m (0.01 pli) and about 17.5 N/m (0.1 pli) within the free loop BZ₁.

The free loop 215 can accommodate more or less flexible glass ribbon 46 by adjusting the free loop shape. The buffer zone BZ₁ can serve as an accumulator of error between processing zones A and B. The buffer zone BZ₁ can accommodate errors such as path length differences due to velocity, twist or shape variance due to strain mismatch and machine alignment errors. In some embodiments, a loop sensor 240 (FIGS. 3 and 4), such as an ultrasonic or optical sensor, may be provided to maintain a preselected loop height. In some embodiments, a tension sensor (e.g., a strain gauge) may be provided to measure tension within the flexible glass ribbon 46. In some embodiments, strain gage measurement of web tension may be employed with roller conveyance. The strain gages may be mounted in the roller bearing mounts. In some embodiments, drives driving rollers providing the positions 217, 219 may have an in-line torque transducer used to measure tension within the flexible glass ribbon 46. The sensors may provide real-time information to the global control device 70, which can adjust the speed and/or tension of the driven rollers based on the information.

Another buffer zone BZ₂ may be provided between processing zone B and processing zone C for process isolation between the processing zones B and C. Within the buffer zone BZ₂, the flexible glass ribbon 46 may be held in a free loop 221 and may hang in a catenary between entrance and exit positions 223 and 225. For example, positions 223 and 225 may be between about four meters and about 12 meters apart, for example, to allow use of a number of cullet chutes, loop out mitigation devices, etc. Between these two positions 223 and 225, the flexible glass ribbon 46 is not pulled tight but, instead, hangs under its own weight. For example, the tension in the flexible glass ribbon 46 is determined by weight of the flexible glass ribbon 46 and may be no more than about 17.5 N/m (0.1 pli), such as between about 1.75 N/m (0.01 pli) and about 17.5 N/m (0.1 pli) within the free loop 221.

The free loop 221 can accommodate more or less flexible glass ribbon 46 by adjusting the free loop shape. The buffer zone BZ₂ can serve as an accumulator of error between processing zones B and C. The buffer zone BZ₂ can accommodate errors such as path length differences due to velocity, twist or shape variance due to strain mismatch and machine alignment errors. In some embodiments, a loop sensor 240 (FIGS. 3 and 4), such as an ultrasonic or optical sensor, may be provided to maintain a preselected loop height. In some embodiments, a tension sensor (e.g., a strain gauge) may be provided to measure tension within the flexible glass ribbon 46. In some embodiments, drives driving the rollers providing the positions 221, 225 may have an in-line torque transducer used to measure tension within the flexible glass ribbon 46. The sensors may provide real-time information to the global control device 70, which can adjust the speed and/or tension of driven rollers disposed at the entrance and exit positions based on the information.

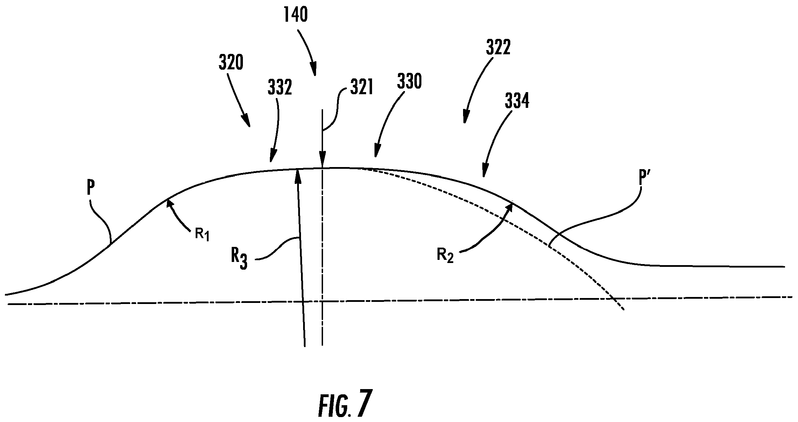

Referring now to FIG. 7, it has been discovered that providing a non-flat, convex conveyance path for the flexible glass ribbon 46 in the cutting zone 140 may be desirable, particularly for ultra-thin glass webs. The conveyance path is provided with a radius of curvature R3 of a preselected distance. For example, a radius of curvature R3 of more than about 1.83 metres (72 inches), such as at least about 2.54 metres (100 inches), such as at least about 3.81 metres (150 inches), such as at least about 5.08 metres (200 inches), such as 6.35 metres (250 inches) or more may be provided. In some embodiments, the radius of curvature R3 may be between about 2.54 metres (100 inches) and about 10.16 metres (400 inches), such as between about 5.08 (200) and 7.62 (300), such as about 6.35 metres (250 inches).

In FIG. 7, a diagrammatic illustration of a conveyance path P for the flexible glass ribbon is illustrated. The laser beam and crack tip are represented by arrow 321. In this illustrative example, the conveyance path P may include an upstream portion 320 that is upstream of the cutting zone 140 and a downstream portion 322 that is downstream of the cutting zone 140. In some embodiments, the radius of curvature R₁ of the upstream portion 320 is the same as the radius of curvature R₂ of the downstream portion 322. In other embodiments, their respective radius of curvature R₁, R₂ may be different. The radius of curvature R₃ of the cutting zone 140 may be different from and greater than the radius of curvature R₁ of the upstream portion 320 and the radius of curvature R₂ of the downstream portion 322. As one example, the radius of curvature R₁ and R₂ may be at least about 1.83 metres (72 Inches) and the radius of curvature R₃ may be between about 5.08 (200) and 7.62 metres (300 inches), such as about 6.35 metres (250 inches).

The conveyance path P of the central portion 106 of the flexible glass ribbon 46 may be different from a conveyor path P' of the beaded edges 102 and 104 (shown by the broken line) separated from the central portion 106. For example, the conveyance path P of the central portion 106 may include a flat portion 330 having an infinite radius of curvature, while the conveyance path P' of the edges 102 and 104 may not include such a flat portion. In some embodiments, for example, the conveyance path P may include the upstream portion 320 having the radius of curvature R₁, the cutting zone 140 having the radius of curvature R₃, the flat portion 330 (e.g., about 4 inches in length extending in the ribbon travel direction from the end of the portion having curvature R3 to the start of the portion having curvature R2) and the downstream portion 322 having radius of curvature R₂. The conveyance path P' may include an upstream portion 332 that follows the upstream portion 320 of the conveyance path P into the cutting zone 140 since there has been no separation of the edges 102 and 104. Once separated, the conveyance path P' may not include a flat portion and may diverge from the conveyance path P along a downstream portion 334, e.g., having a radius R₂.

Embodiments described herein can provide a consistent lateral and angular orientation of the flexible glass ribbon as it moves through the cutting zone for a bead removal process. Optimization of overall flexible glass ribbon stability through various tools that control the position of the central or product portion of the flexible glass ribbon and beaded edges is provided. Isolation of processes from each other can reduce perturbations, vibrations and transient effects between the processes are provided. Conveyance path geometries are provided that can reduce or minimize contact between newly created edges and the central portion of the flexible glass ribbon downstream of the laser cutting process. While laser cutting is described primarily above, other edge separation processes include horizontal edge separation and vertical edge separation by increasing the bead radius or raising the flexible glass ribbon using increased gas pressure.

It should be emphasized that the above-described embodiments of the present invention, particularly any "preferred" embodiments, are merely possible examples of implementations, merely set forth for a clear understanding of various principles of the invention. Many variations and modifications may be made to the above-described embodiments of the invention without departing substantially from the various principles of the invention.

## Claims

1. A method of continuous processing of flexible glass ribbon (46) having a thickness of no more than 0.35 mm using a glass processing apparatus (100), the method comprising:
continuously feeding the flexible glass ribbon (46) through the glass processing apparatus (100), the glass processing apparatus (100) comprising a cutting zone (140), including an edge trimming apparatus (170) configured to separate an edge (102, 104) of the flexible glass ribbon (46) as the flexible glass ribbon (46) moves;
controlling feed rate of the flexible glass ribbon (46) through the cutting zone (140) using a global control device (70); and
controlling lateral position of the flexible glass ribbon (46) through the cutting zone (140) using a multi-axis steering apparatus (150) comprising a first roller set (152) and a second roller set (154) located downstream of the first roller set (152),
wherein the first roller set (152) includes a first roller pair (156) located at a first edge (102) of the flexible glass ribbon (46) and a second roller pair (158) located at a second edge (104) of the flexible glass ribbon (46) opposite the first edge (102),
wherein the second roller set (154) includes a first roller pair (164) located at the first edge (102) of the flexible glass ribbon (46) and a second roller pair (166) located at the second edge (104) of the flexible glass ribbon (46),
**characterised in that** the step of controlling the lateral position of the flexible glass ribbon (46) includes:
providing a speed differential between the first roller pair (156, 164) and the second roller pair (158, 166) of one or both of the first roller set (152) and the second roller set (154), and/or,
changing a direction of rotation of one or both of the first roller pair (156, 164) and the second roller pair (158,166) of one or both of the first roller set (152) and the second roller set (154) to be offset from a machine centerline.

2. The method of claim 1, further wherein:
the glass processing apparatus (100) further comprising at least two additional processing zones including a first processing zone (A), and a second processing zone (C);
controlling a feed rate of the flexible glass ribbon (46) through each of the first processing zone (A), the second processing zone and the cutting zone (140) using a global control device (70); and
controlling a lateral position of the flexible glass ribbon (46) through the second processing zone (C) using a multi-axis steering apparatus (150) comprising a first roller set (152) and a second roller set (154), located downstream of the first roller set (152).

3. The method of claim 2 further comprising providing a first buffer zone (BZ₁), between the first processing zone (A) and the cutting zone (140), in which the flexible glass substrate is disposed in a first catenary (215), wherein the first catenary (215) is defined by two spaced-apart payoff positions (217, 219).

4. The method of claim 2 or claim 3 further comprising providing a second buffer zone (BZ₂), between the cutting zone (140) and the second processing zone (C), in which the flexible glass substrate (46) is disposed in a second catenary (221), wherein the second catenary (221) is defined by two, spaced-apart payoff positions (223, 225).

5. A glass processing apparatus (100) that processes a flexible glass ribbon (46) having a thickness of no more than 0.35 mm comprising:
a forming apparatus (22) in a first processing zone (A), the forming apparatus (22) configured to form the flexible glass ribbon (46);
an edge trimming apparatus (170) in a cutting zone (140) of a second processing zone (C), the edge trimming apparatus (170) comprising a cutting device (174) configured to separate an edge (102, 104) of the flexible glass ribbon (46), as the flexible glass ribbon (46) moves;
a multi-axis steering apparatus (150) comprising a first roller set (152) located upstream of the cutting device (174) and a second roller set (154) located downstream of the cutting device (174); and
a global control device (70) that controls lateral position of the flexible glass ribbon (46) through the second processing zone (C) using the multi-axis steering apparatus (150),
wherein the first roller set (152) includes a first roller pair (156) located at a first edge (102) of the flexible glass ribbon (46) and a second roller pair (158) located at a second edge (104) of the flexible glass ribbon (46) opposite the first edge (102), and further wherein the second roller set (154) includes a first roller pair (164) located at the first edge (102) of the flexible glass ribbon (46) and a second roller pair (166) located at the second edge (104) of the flexible glass ribbon (46),
**characterised in that** the global control device (70) controls the lateral position of the flexible glass ribbon (46):
by providing a speed differential between the first roller pair (156, 164) and the second roller pair (158, 166) of one or both of the first roller set (152) and the second roller set (154), and/or
by changing a direction of rotation of one or both of the first roller pair (156, 164) and the second roller pair (158, 166) of one or both of the first roller set (152) and the second roller set (154) to be offset from a machine centerline.

6. The glass processing apparatus (100) of claim 5, wherein the second processing zone (C) has a conveyance path for the flexible glass ribbon (46) through the cutting zone (140) having a radius of curvature (R3) of between 2.54 m (100 inches) and 10.16 m (400 inches).

7. The glass processing apparatus (100) of claim 6, wherein the conveyance path comprises an upstream portion that is upstream of the cutting zone (140), the upstream portion comprising a radius of curvature (R1) that is different than the radius of curvature (R3) of the conveyance path through the cutting zone (140).

8. The glass processing apparatus (100) of any one of claims 5-7, wherein the cutting device (174) comprises a laser.

## Patentansprüche

1. Verfahren zum kontinuierlichen Verarbeiten eines flexiblen Glasbands (46) mit einer Stärke von nicht mehr als 0,35 mm unter Verwendung einer Glasverarbeitungsvorrichtung (100), das Verfahren umfassend:
kontinuierliches Zuführen des flexiblen Glasbands (46) durch die Glasverarbeitungsvorrichtung (100), die Glasverarbeitungsvorrichtung (100) umfassend eine Schneidzone (140), die eine Randbeschneidevorrichtung (170) beinhaltet, die konfiguriert ist, um einen Rand (102, 104) des flexiblen Glasbands (46) zu trennen, wenn sich das flexible Glasband (46) bewegt;
Steuern der Zufuhrgeschwindigkeit des flexiblen Glasbands (46) durch die Schneidzone (140) unter Verwendung einer globalen Steuervorrichtung (70); und
Steuern der seitlichen Position des flexiblen Glasbands (46) durch die Schneidzone (140) unter Verwendung einer Mehrachs-Lenkvorrichtung (150), umfassend einen ersten Rollensatz (152) und einen zweiten Rollensatz (154), der stromabwärts von dem ersten Rollensatz (152) angeordnet ist,
wobei der erste Rollensatz (152) ein erstes Rollenpaar (156), das sich einem ersten Rand (102) des flexiblen Glasbands (46) befindet, und ein zweites Rollenpaar (158), das sich an einem zweiten Rand (104) des flexiblen Glasbands (46) gegenüber dem ersten Rand (102) befindet, beinhaltet,
wobei der zweite Rollensatz (154) ein erstes Rollenpaar (164), das sich an dem ersten Rand (102) des flexiblen Glasbands (46) befindet, und ein zweites Rollenpaar (166), das sich an dem zweiten Rand (104) des flexiblen Glasbands (46) befindet, beinhaltet,
**dadurch gekennzeichnet, dass** eines Steuerns der der seitlichen Position des flexiblen Glasbands (46) Folgendes umfasst:
Bereitstellen einer Geschwindigkeitsdifferenz zwischen dem ersten Rollenpaar (156, 164) und dem zweiten Rollenpaar (158, 166) von einem oder beiden von dem ersten Rollensatzes (152) und dem zweiten Rollensatz (154), und/oder,
Ändern einer Drehrichtung von einem oder beiden von dem ersten Rollenpaar (156, 164) und dem zweiten Rollenpaar (158, 166) von einem oder beiden von dem ersten Rollensatz (152) und dem zweiten Rollensatz (154), um von einer Maschinenmittellinie versetzt zu sein.

2. Verfahren nach Anspruch 1, ferner wobei:
die Glasverarbeitungsvorrichtung (100) ferner umfassend mindestens zwei zusätzliche Verarbeitungszonen, die eine erste Verarbeitungszone (A) und eine zweite Verarbeitungszone (C) beinhalten;
Steuern der Zufuhrgeschwindigkeit des flexiblen Glasbands (46) durch jede von der ersten Verarbeitungszone (A), der zweiten Verarbeitungszone und der Schneidzone (140) unter Verwendung einer globalen Steuervorrichtung (70); und
Steuern einer seitlichen Position des flexiblen Glasbands (46) durch die zweite Verarbeitungszone (C) unter Verwendung einer Mehrachs-Lenkvorrichtung (150), umfassend einen ersten Rollensatz (152) und einen zweiten Rollensatz (154), der stromabwärts von dem ersten Rollensatz (152) angeordnet ist.

3. Verfahren nach Anspruch 2, ferner umfassend ein Bereitstellen einer ersten Pufferzone (BZ₁) zwischen der ersten Verarbeitungszone (A) und der Schneidzone (140), in der das flexible Glassubstrat in einer ersten Kettenlinie (215) angeordnet ist, wobei die erste Kettenlinie (215) durch zwei beabstandete Abwickelpositionen (217, 219) definiert ist.

4. Verfahren nach Anspruch 2 oder Anspruch 3, ferner umfassend ein Bereitstellen einer zweiten Pufferzone (BZ₂) zwischen der Schneidzone (140) und der zweiten Verarbeitungszone (C), in der das flexible Glassubstrat (46) in einer zweiten Kettenlinie (221) angeordnet ist, wobei die zweite Kettenlinie (221) durch zwei voneinander beabstandete Abwickelpositionen (223, 225) definiert ist.

5. Glasverarbeitungsvorrichtung (100), die ein flexibles Glasband (46) mit einer Stärke von nicht mehr als 0,35 mm verarbeitet, umfassend:
eine Formungsvorrichtung (22) in einer ersten Verarbeitungszone (A), wobei die Formungsvorrichtung (22) konfiguriert ist, um das flexible Glasband (46) zu formen;
eine Randbeschneidevorrichtung (170) in einer Schneidzone (140) einer zweiten Verarbeitungszone (C), wobei die Randbeschneidevorrichtung (170) eine Schneidvorrichtung (174) umfasst, die konfiguriert ist, um einen Rand (102, 104) des flexiblen Glasbands (46) zu trennen, wenn sich das flexible Glasband (46) bewegt;
eine Mehrachs-Lenkvorrichtung (150), umfassend einen ersten Rollensatz (152), der sich stromaufwärts von der Schneidvorrichtung (174) befindet, und einen zweiten Rollensatz (154), der sich stromabwärts von der Schneidvorrichtung (174) befindet; und
eine globale Steuervorrichtung (70), die eine seitliche Position des flexiblen Glasbands (46) durch die zweite Verarbeitungszone (C) unter Verwendung der Mehrachs-Lenkvorrichtung (150) steuert,
wobei der erste Rollensatz (152) ein erstes Rollenpaar (156), das sich einem ersten Rand (102) des flexiblen Glasbands (46) befindet, und ein zweites Rollenpaar (158), das sich an einem zweiten Rand (104) des flexiblen Glasbands (46) gegenüber dem ersten Rand (102) befindet, beinhaltet, und ferner wobei der zweite Rollensatz (154) ein erstes Rollenpaar (164), das sich an dem ersten Rand (102) des flexiblen Glasbands (46) befindet, und ein zweites Rollenpaar (166), das sich an dem zweiten Rand (104) des flexiblen Glasbands (46) befindet, beinhaltet,
**dadurch gekennzeichnet, dass** die globale Steuervorrichtung (70) die seitliche Position des flexiblen Glasbands (46) steuert:
durch Bereitstellen einer Geschwindigkeitsdifferenz zwischen dem ersten Rollenpaar (156, 164) und dem zweiten Rollenpaar (158, 166) von einem oder beiden von dem ersten Rollensatzes (152) und dem zweiten Rollensatz (154), und/oder
durch Ändern einer Drehrichtung von einem oder beiden von dem ersten Rollenpaar (156, 164) und dem zweiten Rollenpaar (158, 166) von einem oder beiden von dem ersten Rollensatz (152) und dem zweiten Rollensatz (154), um von einer Maschinenmittellinie versetzt zu sein.

6. Glasverarbeitungsvorrichtung (100) nach Anspruch 5, wobei die zweite Verarbeitungszone (C) einen Förderweg für das flexible Glasband (46) durch die Schneidzone (140) aufweist, der einen Krümmungsradius (R3) zwischen 2,54 m (100 Zoll) und 10,16 m (400 Zoll) aufweist.

7. Glasbearbeitungsvorrichtung (100) nach Anspruch 6, wobei der Förderweg einen stromaufwärtigen Abschnitt umfasst, der sich stromaufwärts von der Schneidzone (140) befindet, der stromaufwärtige Abschnitt umfassend einen Krümmungsradius (R1), der sich von dem Krümmungsradius (R3) des Förderwegs durch die Schneidzone (140) unterscheidet.

8. Glasbearbeitungsvorrichtung (100) nach einem der Ansprüche 5-7, wobei die Schneidvorrichtung (174) einen Laser umfasst.

## Revendications

1. Procédé de traitement en continu d'un ruban de verre flexible (46) possédant une épaisseur inférieure ou égale à 0,35 mm à l'aide d'un appareil de traitement de verre (100), le procédé comprenant :
l'introduction en continu du ruban de verre flexible (46) à travers l'appareil de traitement de verre (100), l'appareil de traitement de verre (100) comprenant une zone de coupe (140), comprenant un appareil de découpe de bord (170) conçu pour séparer un bord (102, 104) du ruban de verre flexible (46) lorsque le ruban de verre flexible (46) se déplace ;
la commande de la vitesse d'introduction du ruban de verre flexible (46) à travers la zone de coupe (140) à l'aide d'un dispositif de commande globale (70) ; et
la commande de la position latérale du ruban de verre flexible (46) à travers la zone de coupe (140) à l'aide d'un appareil de guidage multiaxes (150) comprenant un premier ensemble de rouleaux (152) et un second ensemble de rouleaux (154) situé en aval du premier ensemble de rouleaux (152),
ledit premier ensemble de rouleaux (152) comprenant une première paire de rouleaux (156) située au niveau d'un premier bord (102) du ruban de verre flexible (46) et une seconde paire de rouleaux (158) située au niveau d'un second bord (104) du ruban de verre flexible (46) à l'opposé du premier bord (102),
ledit second ensemble de rouleaux (154) comprenant une première paire de rouleaux (164) située au niveau du premier bord (102) du ruban de verre flexible (46) et une seconde paire de rouleaux (166) située au niveau du second bord (104) du ruban de verre flexible (46),
**caractérisé en ce que** l'étape de commande de la position latérale du ruban de verre flexible (46) comprend :
la fourniture d'un différentiel de vitesse entre la première paire de rouleaux (156, 164) et la seconde paire de rouleaux (158, 166) du premier ensemble de rouleaux (152) et/ou du second ensemble de rouleaux (154), et/ou,
le changement d'un sens de rotation de la première paire de rouleaux (156, 164) et/ou de la seconde paire de rouleaux (158, 166) du premier ensemble de rouleaux (152) et/ou du second ensemble de rouleaux (154) devant être décalés par rapport à une ligne centrale de machine.

2. Procédé selon la revendication 1, en outre :
ledit appareil de traitement de verre (100) comprenant en outre au moins deux zones de traitement supplémentaires comprenant une première zone de traitement (A) et une seconde zone de traitement (C) ;
la commande d'une vitesse d'introduction du ruban de verre flexible (46) à travers chacune de la première zone de traitement (A), de la seconde zone de traitement et de la zone de coupe (140) à l'aide d'un dispositif de commande globale (70) ; et
la commande d'une position latérale du ruban de verre flexible (46) à travers la seconde zone de traitement (C) à l'aide d'un appareil de guidage multiaxe (150) comprenant un premier ensemble de rouleaux (152) et un second ensemble de rouleaux (154), situé en aval du premier ensemble de rouleaux (152).

3. Procédé selon la revendication 2, comprenant en outre la fourniture d'une première zone tampon (BZ₁), entre la première zone de traitement (A) et la zone de coupe (140), ledit substrat en verre flexible étant disposé dans une première caténaire (215), ladite première caténaire (215) étant définie par deux positions de rendement espacées (217, 219).

4. Procédé selon la revendication 2 ou la revendication 3, comprenant en outre la fourniture d'une seconde zone tampon (BZ₂), entre la zone de coupe (140) et la seconde zone de traitement (C), dans laquelle le substrat en verre flexible (46) est disposé dans une seconde caténaire (221), ladite seconde caténaire (221) étant définie par deux positions de rendement espacées (223, 225).

5. Appareil de traitement de verre (100) qui traite un ruban de verre flexible (46) possédant une épaisseur inférieure ou égale à 0,35 mm comprenant :
un appareil de formage (22) dans une première zone de traitement (A), l'appareil de formage (22) étant conçu pour former le ruban de verre flexible (46) ;
un appareil de découpe de bord (170) dans une zone de coupe (140) d'une seconde zone de traitement (C), l'appareil de découpe de bord (170) comprenant un dispositif de coupe (174) conçu pour séparer un bord (102, 104) du ruban de verre flexible (46), lorsque le ruban de verre flexible (46) se déplace ;
un appareil de guidage multiaxe (150) comprenant un premier ensemble de rouleaux (152) situé en amont du dispositif de coupe (174) et un second ensemble de rouleaux (154) situé en aval du dispositif de coupe (174) ; et
un dispositif de commande globale (70) qui commande la position latérale du ruban de verre flexible (46) à travers la seconde zone de traitement (C) à l'aide de l'appareil de guidage multiaxe (150),
ledit premier ensemble de rouleaux (152) comprenant une première paire de rouleaux (156) située sur un premier bord (102) du ruban de verre flexible (46) et une seconde paire de rouleaux (158) située sur un second bord (104) du ruban de verre flexible (46) à l'opposé du premier bord (102), et en outre ledit second ensemble de rouleaux (154) comprenant une première paire de rouleaux (164) située au niveau du premier bord (102) du ruban de verre flexible (46) et une seconde paire de rouleaux (166) située au niveau du second bord (104) du ruban de verre flexible (46),
**caractérisé en ce que** le dispositif de commande global (70) commande la position latérale du ruban de verre flexible (46) :
en fournissant un différentiel de vitesse entre la première paire de rouleaux (156, 164) et la seconde paire de rouleaux (158, 166) du premier ensemble de rouleaux (152) et/ou du second ensemble de rouleaux (154), et/ou
en modifiant le sens de rotation de la première paire de rouleaux (156, 164) et/ou de la seconde paire de rouleaux (158, 166) du premier ensemble de rouleaux (152) et/ou du second ensemble de rouleaux (154) devant être décalés par rapport à une ligne centrale de machine.

6. Appareil de traitement de verre (100) selon la revendication 5, ladite seconde zone de traitement (C) possédant un chemin de transport pour le ruban de verre flexible (46) à travers la zone de coupe (140) possédant un rayon de courbure (R3) compris entre 2,54 m (100 pouces) et 10,16 m (400 pouces).

7. Appareil de traitement de verre (100) selon la revendication 6, ledit trajet de transport comprenant une partie en amont qui est en amont de la zone de coupe (140), la partie en amont comprenant un rayon de courbure (R1) qui est différent du rayon de courbure (R3) du chemin de transport à travers la zone de coupe (140).

8. Appareil de traitement de verre (100) selon l'une quelconque des revendications 5 à 7, ledit dispositif de coupe (174) comprenant un laser.
